# DEMANDE DE BREVET EUROPEEN

(11) **EP 1 281 506 A1**
(43) Date de publication de la demande: **05.02.2003**
(21) Numéro de dépôt: 01440250.7
(22) Date de dépôt: 02.08.2001
(51) Int. Cl.: B29D 31/51, B29D 31/508

(54) **Procédé de fabrication par moulage d'une semelle à deux densités pour chaussures et notamment pour chaussures de sécurité ou pour chaussures sportives**

(71) Demandeur: IPSA, 07102 Annonay (FR)
(72) Inventeur: Schwilden, Bernard, 07320St. Agreve (FR)
(74) Mandataire: Arbousse-Bastide, Jean-Claude Philippe

(57) **Abrégé**

Procédé de fabrication par moulage d'une semelle (1) à deux densités pour chaussures et notamment pour chaussures de sécurité ou pour chaussures sportives. Il consiste à poser une ébauche (1) de caoutchouc et de préférence un caoutchouc nitrile sur une forme puis à mouler ladite ébauche sur la chaussure sous la pression d'un pavé en contrôlant les paramètres de vulcanisation à savoir : la pression de moulage, la température de vulcanisation à la fois pour le moule et pour la forme et le temps de vulcanisation, ladite pression de moulage étant effectuée en commandant des phases (2) successives de pression, selon une variation linéaire de la pression, sur la matière à mouler pendant que celle-ci est en phase de fluage élastique, la variation du gradient de température à l'intérieur de la matière se traduisant par la formation de deux couches interne et externe de densité différente et le volume de matière pour permettre son expansion.

## Description

La présente invention a pour objet un procédé de réalisation d'une semelle à deux densités pour chaussures et notamment pour chaussures sportives et de sécurité.

Les semelles à deux densités sont généralement constituées de deux couches en caoutchouc de densité différente et qui sont obtenues en deux étapes de fabrication distinctes à savoir une couche externe en caoutchouc compact formant le fond de la semelle et une couche interne en caoutchouc expansé. La couche externe est une couche haute densité, ultra résistante à l'usure, tandis que la couche interne à faible densité est destinée à procurer un bon confort à la chaussure et une bonne flexibilité à la semelle.

Toutefois il arrive fréquemment que les deux couches qui constituent la semelle se séparent, ce qui fragilise la chaussure lors de son utilisation.

En outre la réalisation d'une semelle à partir de deux couches fabriquées séparément demande une mise en oeuvre et une infrastructure complexe se traduisant par un coût de fabrication élevé.

La présente invention a pour but de remédier à ces inconvénients en proposant un procédé de réalisation d'une semelle à deux densités d'une grande légèreté et d'un très bon confort d'utilisation tout en possédant une résistance à l'usure et aux agents chimiques supérieure aux semelles actuelles et un coût de fabrication inférieur à celui de ces dernières.

Le procédé de réalisation d'une semelle par moulage selon la présente invention consiste à poser une ébauche de caoutchouc et de préférence un caoutchouc nitrile sur une forme puis à mouler ladite ébauche sur la chaussure sous la pression d'un moyen de pression tel qu'un pavé en contrôlant :
- les paramètres de vulcanisation à savoir : la pression de moulage, la température de vulcanisation à la fois pour le moule et pour la forme et le temps de vulcanisation, ladite pression de moulage étant effectuée en commandant des phases successives de pressions sur la matière à mouler pendant que celle-ci est en phase de fluage élastique,
- le volume de matière pour permettre son expansion.

Conformément à l'invention la variation de pression lors d'une phase de pression sera linéaire dans le temps selon trois étapes : une étape croissante en suivie d'une étape constante appelée par la suite permanence et une étape décroissante, ladite étape constante correspondant à une valeur de pression permettant la vulcanisation du caoutchouc sur une durée déterminée pour obtenir le dégazage de la matière. La permanence à la pression maximale est nécessaire pour la définition du relief.

Les valeurs des paramètres de vulcanisation sont de préférence égales à environ :
- 50 kg/cm2 pour la pression de moulage
- 160°C pour le moule et 80°C pour la forme
- 11 minutes pour le temps de vulcanisation

Le gaz de polymérisation produit pendant la phase de durcissement de la matière sera évacué par la présence d'évents micro-poreux pratiqués dans la paroi du pavé de pression.

Les avantages et les caractéristiques de la présente invention ressortiront plus clairement de la description qui suit et qui se rapporte au dessin annexé, lequel en représente un mode de réalisation non limitatif.
- la figure 1 représente une vue en plan d'une ébauche pour la réalisation du procédé selon l'invention.
- la figure 2 représente une vue de dessous du pavé utilisé dans le procédé selon la présente invention.
- la figure 3 représente les différentes phases de pression au cours d'un cycle de fabrication d'une semelle selon le procédé de la présente invention.

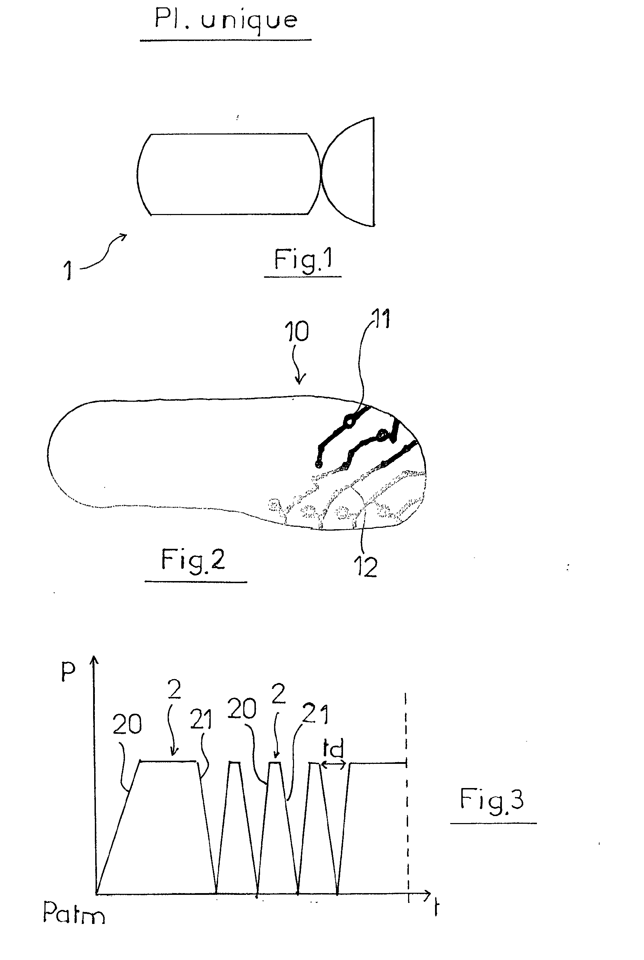

Si on se réfère à la figure 1 on peut voir une ébauche 1 de caoutchouc de nitrile dont les dimensions sont déterminées en fonction de la pointure.

L'ébauche 1 est destinée à être posée sur une forme afin d'être moulée sur la tige sous la pression d'un pavé 10 représenté à la figure 2.

Le pavé 10 permet également de procurer le dessin définitif à la semelle obtenue à partir de l'ébauche 1.

On définira par la suite par vulcanisation le processus de polymérisation naturelle à haute température, c'est à dire environ égale à 160°C, du caoutchouc par action d'un agent réticulant, de préférence du soufre à 5% en masse.

Le procédé selon la présente invention consiste à réaliser, comme on peut le voir sur la figure 3, des phases 2 successives de pression sur l'ébauche 1 grâce au pavé 10 en réalisant pour chaque phase 2 de pression des variations linéaires de la pression de manière à permettre un étalage fluide et élastique de l'ébauche 1 dans le moule, non représenté.

Ces variations linéaires se décomposent au cours d'une phase 2 de pression en une première étape croissante 20 jusqu'à atteindre une valeur de pression maximale définissant la deuxième étape 21 dont la valeur de la pression maximale et la durée de l'étape sont déterminées pour obtenir la vulcanisation du caoutchouc et la définition du relief de la semelle puis une troisième étape 22 de retour à la valeur zéro de la pression. Le temps td qui sépare, entre deux phases successives, deux étapes constantes correspondant à la valeur maximale de la pression est déterminé de manière à obtenir un dégagement gazeux suffisant pour obtenir une semelle sans bulle d'air. La vitesse de variation de la pression est déterminée de manière à obtenir un fluage parfait de l'ébauche sur la tige tout en minimisant le temps de cycle. L'étape décroissante représente le soulèvement du pavé nécessaire au dégazage, ceci entraîne une chute de pression jusqu'à la pression atmosphérique Patm.

Par ailleurs, la température de vulcanisation est différente entre le moule et la forme et sera de préférence égale à 160°C pour le moule et égale à 80°C pour la forme.

Ainsi la variation du gradient de température à l'intérieur de la matière lors de l'opération de vulcanisation entraîne une différence d'homogénéisation de la matière qui se traduit par la formation de deux couches de densité différentes à savoir une couche d'usure externe vulcanisée et une couche interne de confort comprenant des micro bulles.

La couche externe qui est en contact avec les parois du moule se trouve directement exposée à la température de vulcanisation maximale de 160°C environ ce qui la rend très compacte et lui procure une forte densité voisine de celle d'origine soit 1,18 kg/dm3. Elle présente donc les caractéristiques mécaniques requises dans une semelle en caoutchouc de nitrile telles que la résistance à l'usure, la résistance à la chaleur et la résistance aux agents chimiques.

La couche interne est exposée à une température inférieure à celle du moule mais suffisante pour permettre un dégagement gazeux et entraîner l'expansion volumique des bulles d'air en constituant une sorte de "mousse" garantissant à la semelle un très bon confort et une grande légèreté. La densité moyenne de la couche interne est égale à environ 0,8 kg/dm3 tandis que l'ensemble de la semelle possède une densité moyenne voisine de 1.

Par ailleurs pour éviter une accumulation de gaz à l'intérieur du moule qui serait nuisible à la définition du relief, génération de bulles sur la surface de la semelle, on pourra réaliser sur toute la surface du moule des évents 11 micro poreux permettant d'évacuer l'air tout en empêchant, du fait de leurs petites dimensions, le caoutchouc de sortir par lesdits évents. En outre les évents seront de préférence reliés entre eux par des canaux 12.

## Revendications

**1.** Procédé de fabrication par moulage d'une semelle (1) à deux densités pour chaussures et notamment pour chaussures de sécurité ou pour chaussures sportives **caractérisé en ce qu'**il consiste à poser une ébauche (1) de caoutchouc et de préférence un caoutchouc nitrile sur une forme puis à mouler ladite ébauche sur la chaussure sous la pression d'un pavé en contrôlant :
- les paramètres de vulcanisation à savoir : la pression de moulage, la température de vulcanisation à la fois pour le moule et pour la forme et le temps de vulcanisation, ladite pression de moulage étant effectuée en commandant des phases (2) successives de pression, selon une variation linéaire de la pression, sur la matière à mouler pendant que celle-ci est en phase de fluage élastique, la variation du gradient de température à l'intérieur de la matière se traduisant par la formation de deux couches interne et externe de densité différente,
- le volume de matière pour permettre son expansion.

**2.** Procédé selon la revendication 1 **caractérisé en ce qu'**une phase (2) de pression se déroule selon trois étapes successives : une étape croissante (20), une étape constante (21) et une étape décroissante (22) jusqu'à la valeur de la pression atmosphérique, ladite étape constante (2) correspondant à une valeur de pression maximale Pm et une durée de pression permettant la vulcanisation du caoutchouc et la définition du relief.

**3.** Procédé selon la revendication 1 ou la revendication 2 **caractérisé en ce que** la vitesse de variation de la pression est déterminée de manière à obtenir un fluage parfait du caoutchouc tout en minimisant le temps de cycle.

**4.** Procédé selon l'une quelconque des revendications 1 à 3 **caractérisé en ce que** les valeurs des paramètres de vulcanisation seront de préférence égales à environ :
- 50 kg/cm2 pour la pression de moulage
- 160°C pour le moule et 80°C pour la forme
- 11 minutes pour le temps de vulcanisation

**5.** Procédé selon l'une quelconque des revendications précédentes **caractérisé en ce que** le gaz de polymérisation produit pendant la phase de durcissement de la matière sera évacué grâce à des évents (11) micro-poreux pratiqués dans la paroi du pavé.

**4.** Procédé selon la revendication 5 **caractérisé en ce que** les évents (11) sont reliés entre eux par des canaux (12).

**5.** Procédé selon l'une quelconque des revendications 1 à 4 **caractérisé en ce que** la couche externe est en contact avec les parois du moule et est directement exposée à la température de vulcanisation de manière à être complètement polymérisée.

**6.** Procédé selon l'une quelconque des revendications précédentes **caractérisé en ce que** la densité moyenne de la couche externe est égale à 1,18 kg/dm3 et la densité moyenne de la couche interne est égale à 0,8 kg/dm3.
